# EUROPEAN PATENT APPLICATION

(11) **EP 4 838 564 A1**
(43) Date of publication of application: **11.11.2026**
(21) Application number: 25901650.9
(22) Date of filing: 12.09.2025
(51) Int. Cl.: H01M 4/04, B05C 19/00, B05C 19/06, B05C 5/02

(54) **ELECTRODE MANUFACTURING APPARATUS AND METHOD FOR MANUFACTURING ELECTRODES**

(30) Priority: 02.12.2024 KR 20240176585
(71) Applicant: LG Energy Solution, Ltd., Seoul 07335 (KR)
(72) Inventor: KIM, Soon, Daejeon 34122 (KR); LEE, Jeong Hyeon, Daejeon 34122 (KR); CHUNG, Changkwon, Daejeon 34122 (KR)
(74) Representative: Plasseraud IP
(86) International application number: PCT/KR2025/014269
(87) International publication number: WO 2026/121484

(57) **Abstract**

A dry electrode manufacturing apparatus according to an embodiment of the present disclosure includes: a feeder unit including a discharge port opened at a lower part thereof and a feeder roller installed below the discharge port; a chute unit configured to receive an electrode powder discharged from the discharge port and supply onto a traveling current collector; and a squeezer that flattens the electrode powder supplied onto the current collector, wherein a density of the flattened electrode powder in a traveling direction of the current collector may be adjusted according to an amount of the electrode powder supplied onto the current collector from the chute unit.

## Description

### TECHNICAL FIELD

### Cross-Reference to Related Application(s)

This application claims priority to and the benefit of Korean Patent Application No. 10-2024-0176585, filed on December 2, 2024, the entire contents of which are incorporated herein by reference.

The present disclosure relate to an apparatus for manufacturing an electrode and a method for manufacturing an electrode, and more particularly, to an apparatus for manufacturing an electrode and a method for manufacturing an electrode that allows the density of the coated portion of the electrode to be adjusted in the electrode process.

### BACKGROUND

In modern society, as portable devices such as a mobile phone, a notebook computer, a camcorder and a digital camera, and an energy storage device (ESS) has been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

The manufacturing process of such a lithium secondary battery is roughly classified into three steps: an electrode process, an assembly process, and a formation process. The electrode process may be again divided into an active material mixing process, an electrode coating process, a rolling process, a slitting process, a winding process, and the like. Among them, the electrode coating process is divided into a wet process of applying an active material slurry to an electrode current collector and a dry process of applying the active material to the current collector in its solid state.

There is a need to develop a more efficient method for manufacturing electrodes that allows the density of the coated portion of the electrode to be adjusted in the electrode process.

### [DETAILED DESCRIPTION OF THE INVENTION]

### [Technical Problem]

It is an object of the present disclosure to form an electrode pattern that allows the density of the electrode powder layer to be adjusted in the electrode process, thereby manufacturing the electrode.

However, the technical objects to be solved by embodiments of the present disclosure are not limited to the above-described objects, and can be variously expanded within the scope of the technical idea included in the present disclosure.

### [Technical Solution]

According to an aspect of the present disclosure, there is provided a dry electrode manufacturing apparatus, comprising: a feeder unit including a discharge port opened at its lower part and a feeder roller installed below the discharge port; a chute unit that provides an electrode powder discharged from the discharge port onto a traveling current collector; and a squeezer that flattens the electrode powder supplied onto the current collector, wherein the density of the flattened electrode powder in the traveling direction of the current collector is adjusted according to the amount of the electrode powder supplied onto the current collector from the chute unit.

The density of the electrode powder flattened by the squeezer may be adjusted according to a height of the electrode powder supplied onto the current collector from the feeder unit.

When an angular velocity of the feeder roller increases, the amount of electrode powder discharged between the discharge port and the feeder roller may increase, when the angular velocity of the feeder roller decreases, the amount of electrode powder discharged between the discharge port and the feeder roller may decrease, and when the angular velocity of the feeder roller is 0, the supply of the electrode powder may be interrupted.

The feeder unit may control the rotational angular velocity of the feeder roller to adjust the supply amount of electrode powder provided to the chute unit, and the feeder roller may be controlled by the angular velocity ω(*t*) of the following Mathematical Equation 1: [Mathematical Equation 1] $\begin{matrix}ω \left(t\right) = \left\{\begin{matrix}{ω}_{m} cos \left(\frac{πt}{2 {T}_{P}}\right) & \left(0\leq t\leq {T}_{P}\right) \\ 0 & \left({T}_{P}\leq t\leq {T}_{P}+{T}_{S}\right)\end{matrix}\right. \\ ω \left(t+n\left({T}_{P}+{T}_{S}\right)\right) = ω \left(t\right)\end{matrix}$ wherein, *Tp* is a first predetermined time interval, *Ts* is a second predetermined time interval, ω*m* is a maximum angular velocity, and n is a positive integer.

The feeder unit may further comprise a leakage prevention structure in which inclined surfaces inclined toward the discharge port are formed on both sides, and which is movable up and down the inclined surfaces according to the angular velocity of the feeder roller.

The chute unit comprises a trapezoid-shaped chute of which a cross-sectional area is formed downward, and both sides are parallel to each other and have different lengths, and more electrode powder may be supplied from one side portion having a shorter length compared to the other side portion.

The supply direction of the electrode powder from the chute unit may be disposed to have at least a component in the TD direction.

The chute unit may be configured to be movable in the TD direction and supply the electrode powder in the TD direction on the current collector.

The feeder unit may supply the electrode powder to the chute unit during a first predetermined time interval so as to form a coated portion of the electrode, and interrupt the supply of the electrode powder to the chute unit during a second predetermined time interval so as to form a non-coated portion of the electrode.

When the electrode powder remains on the non-coated portion of the electrode, the apparatus may further comprise an air blower for removing the electrode powder from the non-coated portion.

According to another aspect of the present disclosure, there is provided a dry electrode manufacturing method, comprising the steps of: (A) supplying an electrode powder from a feeder unit to a chute unit; (B) providing the electrode powder supplied through the chute unit from the feeder unit onto a traveling current collector; and (C) flattening the electrode powder provided on the current collector, wherein the density of the flattened electrode powder in the traveling direction of the current collector is adjusted according to the amount of electrode powder provided in step (B).

In step (B), the density of the electrode powder flattened in step (C) may be adjusted according to the height of the electrode powder supplied onto the current collector.

The step (A) comprises: (A-1) supplying an electrode powder from a feeder unit to a chute unit during a first predetermined time interval; and (A-2) interrupting the supply of the electrode powder from the feeder unit to the chute unit during a second predetermined time interval, wherein step (A-1) may form a coated portion of the electrode, and the step (A-2) may form a non-coated portion of the electrode.

The step (A) and the step (B) are performed alternately and repeatedly, so that patterns of the coated portion and the non-coated portion may be alternately formed.

In step (A), the amount of electrode powder supplied to the chute unit may be adjusted according to the angular velocity of a feeder roller provided at the discharge port of the feeder unit that supplies the electrode powder, and when the angular velocity of the feeder roller is 0, the supply of the electrode powder may be interrupted.

When an angular velocity of the feeder roller increases, the amount of electrode powder discharged between the discharge port and the feeder roller may increase, and when the angular velocity of the feeder roller decreases, the amount of electrode powder discharged between the discharge port and the feeder roller may decrease.

In step (A), the angular velocity of the feeder roller and the amount of the electrode powder supplied from the discharge port of the feeder unit may have a linear relationship.

The step (B) comprises: (B-1) moving the chute unit in the TD direction while the electrode powder is provided on the current collector; and (B-2) interrupting the chute unit from moving in the TD direction while the electrode powder is not provided on the current collector, wherein step (B-1) may form a coated portion of the electrode, and the step (B-2) may form a non-coated portion of the electrode.

The step (B-1) and the step (B-2) are performed alternately and repeatedly, so that patterns of the coated portion and the non-coated portion may be alternately formed.

In step (A), the height of the electrode powder supplied to the chute unit may be adjusted according to the angular velocity of the feeder roller, in step (B), the electrode powder supplied from the feeder unit may be provided on a traveling current collector through a chute unit at an adjusted height, and in step (C), the electrode powder is flattened, so that its density may be adjusted.

In step (A), the feeder unit may control the rotational angular velocity ω(*t*) of the feeder roller to adjust the supply amount of electrode powder provided to the chute unit, and the angular velocity of the feeder roller may be controlled according to the following Mathematical Equation 1: [Mathematical Equation 1] $\begin{matrix}ω \left(t\right) = \left\{\begin{matrix}{ω}_{m} cos \left(\frac{πt}{2 {T}_{P}}\right) & \left(0\leq t\leq {T}_{P}\right) \\ 0 & \left({T}_{P}\leq t\leq {T}_{P}+{T}_{S}\right)\end{matrix}\right. \\ ω \left(t+n\left({T}_{P}+{T}_{S}\right)\right) = ω \left(t\right)\end{matrix}$ wherein, *Tp* is a first predetermined time interval, *Ts* is a second predetermined time interval, ω*m* is a maximum angular velocity, and n is a positive integer.

After the step (C), the method may further comprise (D) removing the electrode powder from the non-coated portion when the electrode powder remains on the non-coated portion of the electrode, and (E) rolling the electrode powder.

### [BRIEF DESCRIPTION OF THE DRAWING]

FIG. 1 shows a schematic diagram of an electrode manufacturing apparatus and an electrode manufacturing process according to an embodiment of the present disclosure.
FIG. 2 shows an enlarged view of the feeder unit of FIG. 1.
FIG. 3 shows a graph of the angular velocity of the feeder unit of FIG. 2.
FIG. 4 shows a plan view of the chute unit of an electrode manufacturing apparatus according to an embodiment of the present disclosure.
FIGS. 5 and 6 show enlarged views of the time point of start and the time point just before then end of a step of supplying electrode powder from the feeder unit during a first predetermined time interval, respectively.
FIG. 7 shows an enlarged view of a step of interrupting the supply of electrode powder from the feeder unit during a second predetermined time interval.
FIG. 8 shows an enlarged view of a step of flattening the electrode powder with a squeezer.
FIGS. 9 and 10 are reference diagrams of FIG. 8.
FIG. 11 shows an enlarged view of a step of removing the electrode powder remaining on the non-coated portion.
FIG. 12 shows an enlarged view of an electrode that has undergone an electrode manufacturing process according to an embodiment of the present disclosure.
FIGS. 13 and 14 show the start point and end point of movement of the chute unit in the electrode manufacturing process according to an embodiment of the present disclosure.
FIG. 15 shows a flowchart of an electrode manufacturing method according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the claimed invention. The present disclosure may be implemented in various different forms, and is not limited to the embodiments described herein.

In order to clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Now, embodiments of the present disclosure will be described with reference to the accompanying drawings.

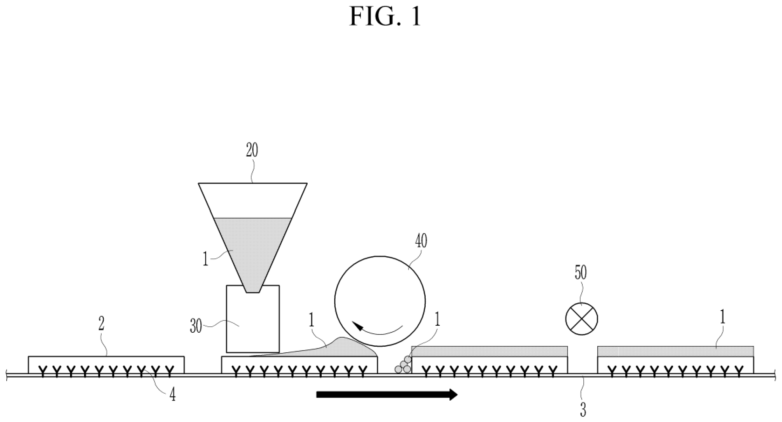

FIG. 1 shows a schematic diagram of an electrode manufacturing apparatus and an electrode manufacturing process according to an embodiment of the present disclosure.

First, the electrode manufacturing apparatus 10 of FIG. 1 may comprise a feeder unit including a discharge port opened at its lower part and a feeder roller installed below the discharge port, a chute unit 30 that provides an electrode powder discharged from the discharge port onto a traveling current collector; and a squeezer 40 that flattens the electrode powder provided on the current collector, and optionally, further comprise an air blower 50 for removing the electrode powder from the non-coated portion.

An electrode powder may be supplied to a chute unit 30 from the discharge port of the feeder unit, and the electrode powder discharged from the discharge port may be supplied onto the traveling current collector 3. The density of the electrode powder 1 flattened by the squeezer 40 in the traveling direction of the current collector 3 may be adjusted according to the amount of the electrode powder 1 supplied from the feeder unit 20 and provided through the chute unit 30. Also, in accordance with the amount of the electrode powder 1 supplied from the feeder unit 20, the height of the electrode powder 1 supplied onto the current collector 3 may be adjusted, and subsequently, the density of the electrode powder 1 flattened by the squeezer 40 may be adjusted.

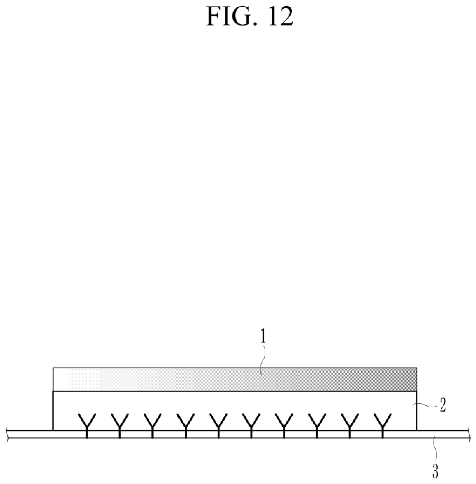

For more details, in a region where a relatively large amount of the electrode powder 1 is discharged from the feeder unit 20, a large amount of the electrode powder 1 is present at the same thickness, so that the density of the electrode powder 1 after flattening may be relatively high. Conversely, in a region where a relatively small amount of the electrode powder 1 is discharged, a smaller amount of the electrode powder 1 is present at the same thickness, so that the density of the electrode powder 1 after flattening may be relatively low. Thereby, the density of the electrode powder 1 layer also changes (see FIG. 12). Further, the region where the electrode powder 1 is supplied to the chute unit 30 from the feeder unit 20 and flattened may correspond to a coated portion of the electrode, and the region where the supply of electrode powder 1 to the chute unit 30 from the feeder unit 20 is interrupted may correspond to a non-coated portion of the electrode. In summary, patterns in which the coated portion and non-coated portion of the electrode are disposed may be formed according to the presence or absence of the supply of the electrode powder 1 from the feeder unit 20, and the density of the coated portion of the electrode may be adjusted according to the amount of electrode powder 1 provided through the chute unit 30 from the feeder unit 20.

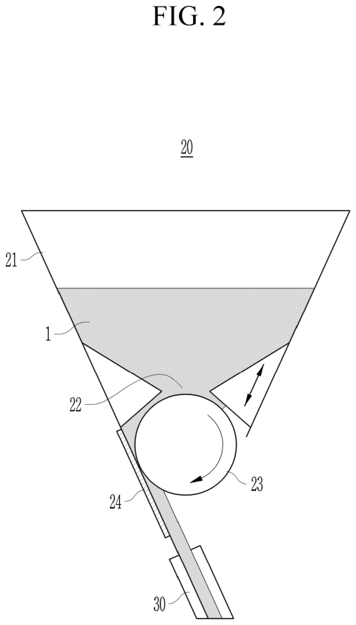

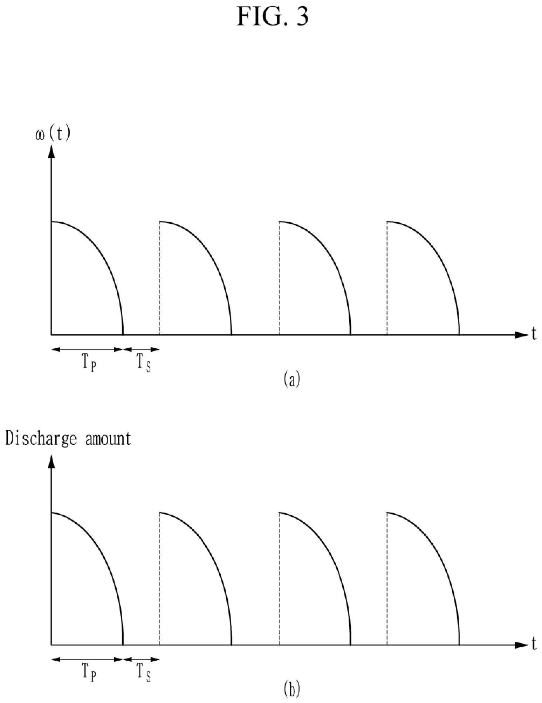

The method for adjusting the supply of electrode powder 1 from the feeder unit 20 will be described in detail later with reference to the examples shown in FIGS. 2 and 3.

At this time, the current collector 3 may travel (move) along the direction indicated by the arrow in FIG. 1 in sheet form. The electrode powder 1 may be provided on the traveling current collector 3 through the chute unit 30. The term "provided on" the current collector 3 includes not only the case where the electrode powder 1 is provided directly onto the current collector 3, but also the case where, as shown in FIG. 1, the electrode powder 1 is provided on a current collector 3 followed by the other electrode powder 2, and the electrode powder 1 is then provided onto the electrode powder 2. That is, this may also include the case where the electrode powder 1 supplied through the chute unit 30 from the feeder unit 20 comes into contact with the current collector 3, and the case where the other electrode powder 2 is interposed between the electrode powder 1 supplied through the chute unit 30 from the feeder unit 20 and the current collector 3.

For reference, the layer of electrode powder 2 shown in FIG. 1 may be supplied onto the current collector 3 through a chute unit 30 from a feeder unit, flattened by a squeezer, and then further subjected to drying processes, etc. The types of the feeder unit and the squeezer used to produce the electrode powder 2 shown in FIG. 1 are not limited. The feeder unit used to produce the layer of electrode powder 2 may be, for example, the feeder unit 20 according to the present disclosure described later in FIG. 2, or any other commonly used feeder unit. Similarly, the squeezer used to produce the layer of electrode powder 2 may be, for example, a roller-shaped squeezer 40 shown in FIG. 1, or a doctor blade.

In some cases, a plurality of different electrode powder layers may be interposed as the other electrode powder layer 2 between the electrode powder 1 and the current collector 3. For more details, as a multilayer electrode structure, a plurality of active material layers including the electrode powder 1 and the electrode powder 2 may be provided onto the current collector 3. In such a case, for example, the porosities of the electrode powder 1 and the electrode powder 2 may be set to be different. Thereby, it is possible to improve the charging speed and ensure the stability of the battery. The porosities of the electrode powder 1 and the electrode powder 2 may be modified and changed in various ways in accordance with the environment in which the present disclosure is realized, the type of the electrode, and the like.

The electrode powders 1 and 2 may be, for example, provided in a dry electrode manufacturing process, and may be provided in powder form as a dry-mixed mixture of electrode active material, a binder polymer, and the like. That is, they may be provided in the form of fine-sized solid particles. The electrode active material will be described later in detail by way of example in the latter part of the specification.

Meanwhile, a primer 4 may be further coated onto the current collector 3. Thereby, it is possible to fix the electrode powder 2 coated onto the current collector 3. In some cases, a primer 4 may also be further coated onto the electrode powder 2, thereby allowing the electrode powder 1 coated thereon to be fixed.

The electrode powder 1 provided onto the current collector 3 may be flattened by a squeezer 40.

The squeezer 40 may be a roller (e.g., a cylindrical roller) as shown in FIG. 1, however, the present disclosure is not limited to those shown in the figure, and may be modified and changed in various ways in accordance with the environment in which the present disclosure is applied, such as a doctor blade.

Optionally, if electrode powder 1 remains in a non-coated portion, the electrode powder 1 may be removed by an air blower 50. For example, in a dry electrode manufacturing process, air can be blown in using an air blower 50 to remove the electrode powder 1 remaining in the non-coated portion. Additionally, even if the electrode powder 2 remains in the non-coated portion even in all steps of the electrode manufacturing process, the electrode powder 2 may be removed with an air blower 50.

In addition, the electrode 1 on which the electrode powder 1 has been flattened may be rolled with a rolling member (not shown).

FIG. 2 shows an enlarged view of the feeder unit 20 of FIG. 1, which is a feeder unit 20 that can be used as an example in the electrode manufacturing method of the present disclosure. FIG. 3 shows a graph of the angular velocity at which the feeder roller of the feeder unit 20 of FIG. 2 rotates.

Referring to FIG. 2, the feeder unit 20 may include a storage unit 21 that stores the electrode powder 1, a discharge port 22 that discharges the electrode powder 1, and a feeder roller 23 disposed below the discharge port 22. Additionally, it may further include a guide unit 24 that guides movement of the electrode powder 1 discharged from the discharge port 22 at a lower end of the discharge port 22.

An opening may be provided at the lower end of the storage unit 21 to form the discharge port 22. The feeder roller 23 may be located below the discharge port 22 to partially block the discharge port 22. That is, a gap may exist between the discharge port 22 and the feeder roller 23. The electrode powder 1 stored in the storage unit 21 is discharged to an outside of the feeder unit 20 through the gap between the discharge port 22 and the feeder roller 23. The movement of the electrode powder 1 discharged to the outside of the feeder unit 20 may be guided along the guide unit 24.

The feeder unit 20 may supply an electrode powder 1 from the feeder unit 20 during a first predetermined time interval (0≤*t*≤*Tp,* see FIG. 3) and interrupt the supply of the electrode powder 1 from the feeder unit 20 during a second predetermined time interval (*Tp*≤*t*≤*Ts,* see FIG. 3).

At this time, the feeder roller 23 may rotate during the first predetermined time interval. At this time, it is possible to control the angular velocity of the feeder roller 23. Controlling the angular velocity of the feeder roller 23 may include increasing the angular velocity of the feeder roller 23 and/or decreasing the angular velocity of the feeder roller 23. Further, the feeder roller 23 may stop rotating during the second predetermined time interval.

The angular velocity *ω*(*t*) of the feeder roller 23 may follow, for example, the following Mathematical Equation 1. [Mathematical Equation 1] $\begin{matrix}ω \left(t\right) = \left\{\begin{matrix}{ω}_{m} cos \left(\frac{πt}{2 {t}_{p}}\right) & \left(0\leq t\leq {T}_{p}\right) \\ 0 & \left({T}_{p}\leq t\leq {T}_{s}\right)\end{matrix}\right. \\ ω \left(t+n\left({T}_{p}+{T}_{s}\right)\right) = ω \left(t\right)\end{matrix}$ wherein, 0≤*t*≤*Tp* is the first predetermined time interval, *Tp*≤*t*≤*Ts* is the second predetermined time interval, *ωm* is the maximum angular velocity, and n is a natural number.

That is, the feeder roller 23 may rotate at the angular velocity *ω*(*t*) described in Mathematical Equation 1 during a first predetermined time interval. Further, it may stop rotating during a second predetermined time interval.

Referring again to FIG. 2, the gap between the discharge port 22 and the feeder roller 23 is formed narrow, and the electrode powder 1 present in the gap between the discharge port 22 and the feeder roller 23 may move downward along the surface of the feeder roller 23 (due to frictional force with the feeder roller 23) through the rotation of the feeder roller 23, and be then discharged.

If the angular velocity of the feeder roller 23 increases, the amount of the electrode powder 1 discharged between the discharge port 22 and the feeder roller 23 may increase. If the angular velocity of the feeder roller 23 decreases, the amount of the electrode powder 1 discharged between the discharge port 22 and the feeder roller 23 may decrease. Further, if the angular velocity of the feeder roller 23 is 0, the supply of electrode powder 1 may be interrupted.

In other words, the electrode powder 1 is discharged and provided onto the chute unit 30 only while the feeder roller 23 is rotating (i.e., only during the first predetermined time interval). Further, while the feeder roller 23 is not rotating (i.e., during the second predetermined time interval), the gap between the discharge port 22 and the feeder roller 23 is formed narrow, so that the electrode powder 1 may not be discharged.

Further, if the angular velocity *ω*(*t*) varies while the feeder roller 23 is rotating, the amount of the electrode powder 1 discharged also varies accordingly. The angular velocity *ω*(*t*) of the feeder roller 23 and the amount of the electrode powder 1 discharged may have a roughly linear relationship. When the feeder roller 23 rotates at a faster angular velocity, the amount of electrode powder 1 moving along the surface of the feeder roller 23 also increases, so that a larger amount of electrode powder 1 may be discharged. Conversely, when the feeder roller 23 rotates at a slower angular velocity, the amount of electrode powder 1 moving along the surface of the feeder roller 23 decreases, so that a smaller amount of electrode powder 1 may be discharged.

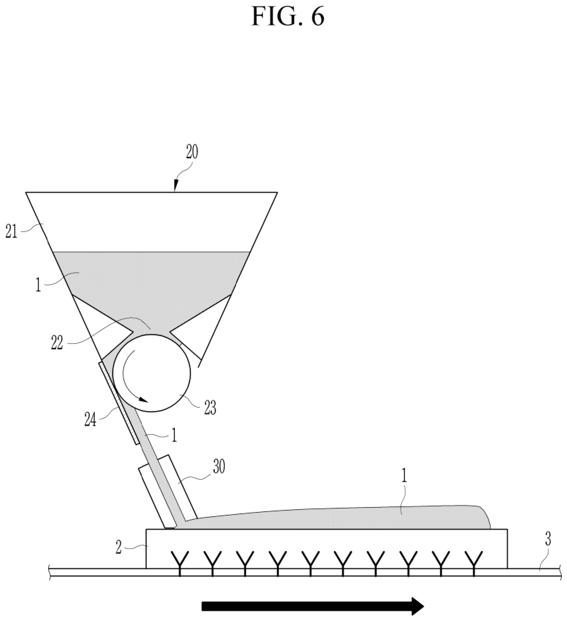

As shown in the graph of FIG. 3(a), according to one exemplary embodiment of the present disclosure, when the feeder roller 23 rotates at the angular velocity *ω*(*t*) of Mathematical Equation 1, it may rotate at a fast angular velocity at the beginning of a first predetermined time interval and then rotate at a gradually slower angular velocity. Thereby, a large amount of electrode powder 1 may be discharged, and then the amount discharged may gradually decrease. FIG. 3(b) graphically shows the amount of electrode powder 1 discharged from the feeder unit 20 when the feeder roller 23 rotates at the angular velocity *ω*(*t*) according to the graph of FIG. 3(a). As a result, as shown in FIG. 6, the height of the electrode powder 1 provided onto the current collector 3 through the chute unit 30 may be high at a front end with respect to the traveling direction of the current collector 3 and then may be gradually lower toward a rear end.

Meanwhile, in the specification of the present disclosure, the term "linear relationship" is a concept that also encompasses the range of errors that may occur during the process. For example, in an exemplary embodiment of FIG. 3, when starting rotation of the feeder roller 23, due to the frictional force between the feeder roller 23 and the discharge port 22, the discharge amount may not be completely proportional to the angular velocity *ω*(*t*) even when the angular velocity *ω*(*t*) of the feeder roller 23 is at its highest. Further, as shown in FIG. 6, when the electrode powder 1 is provided onto the current collector 3, a part of the dry electrode powder that is stacked relatively high may be moved to the periphery by gravity. In one example, FIG. 6 shows an example in which the height of the electrode powder 1 provided through the chute unit 30 and stacked on the current collector 3 when starting rotation of the feeder roller 23 has a smooth shape.

Meanwhile, regarding the method of adjusting the discharge amount in the feeder unit 20 of the present disclosure, the method of adjusting the angular velocity of the feeder roller 23 disposed below the discharge port 22 in FIG. 2 is shown as one example. Therefore, the present disclosure is not limited to those shown in FIG. 2, and as long as the discharge amount can be adjusted in the feeder section 20, various types of supply units can be applied in accordance with the environment in which the present disclosure is realized.

Further, the angular velocity *ω*(*t*) of the feeder roller 23 of the present disclosure is not limited to those shown in FIG. 3, and can be modified and varied in accordance with the characteristics of the electrode to be manufactured and the environment in which the present disclosure is realized. That is, the angular velocity *ω*(*t*) of the feeder roller 23 of the present disclosure is not limited to the above-mentioned Mathematical Equation 1, and can be realized by applying various functions.

Meanwhile, even if the feeder unit 20 is applied by precisely controlling the angular velocity of the feeder roller 23 to the *µ*s level, there may be a problem that the discharge amount is not completely proportional to the angular velocity due to the resistance of the electrode powder between the feeder roller 23 and the discharge port, as previously mentioned. To compensate for this problem, embodiments of the present disclosure may include a configuration of a chute unit 30 that includes a leakage prevention structure and/or a trapezoid-shaped chute.

First, referring to FIG. 2, the feeder unit 20 may have inclined surfaces formed on both sides of the storage unit that are inclined toward the discharge port, and may further include a leakage prevention structure capable of moving up and down the inclined surfaces according to the angular velocity of the feeder roller 23. Specifically, the leakage prevention structure, located on the side of the inclined surfaces on both sides of the storage unit where the electrode powder is stacked more thickly, may be movable in response to the operation of the feeder roller 23. The inclined surface may be determined according to the rotational direction of the feeder roller 23, or the leakage prevention structure may be installed on both inclined surfaces of the storage unit.

For example, when the angular velocity of the feeder roller 23 is 0 (i.e., a second predetermined time), the leakage prevention structure may move downward along the inclined surface to prevent fine leakage of the electrode powder. Further, when the feeder roller 23 restarts rotation (i.e., a first predetermined time), it may interfere with the discharge of the electrode powder if the leakage prevention structure is located on the downward side of the inclined surface. To prevent this, the leakage prevention structure can be moved upward on the inclined surface.

Furthermore, to compensate for the problem that the discharge amount is not perfectly proportional to the angular velocity of the feeder roller 23, some embodiments of the present disclosure may include a configuration of the chute unit 30 including a trapezoid-shaped chute. Specifically, the apparatus may include a chute unit 30 including a trapezoid-shaped chute to uniformly provide the electrode powder onto the traveling current collector from the discharge port.

For example, the chute unit 30 may include a trapezoid-shaped chute in which a cross-sectional area is formed downward, with both sides being parallel to each other and having different lengths.

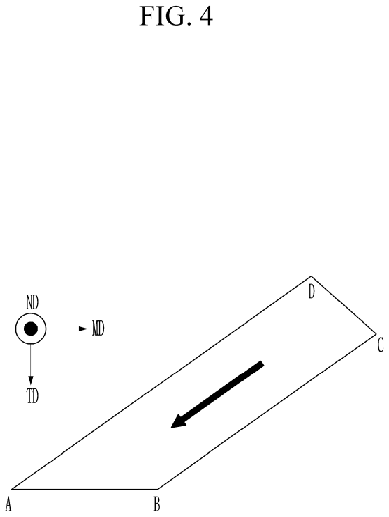

Among the two side portions of such a trapezoidal shape, one side having a shorter length may supply more electrode powder than the other side having a longer length. The chute is a chute device that slides the electrode powder through a trapezoid-shaped chute body and moves onto the current collector, and the electrode powder can slide and move as follows:
Referring to FIG. 4, the upper surface of the chute included in the chute unit 30 is illustrated, and has a trapezoidal shape. The electrode powder may fall to the corner CD of the chute from the discharge port of the feeder unit 20. The fallen electrode powder may slide downward through the trapezoid-shaped chute body to the corner AB and fall onto the current collector. At this time, when comparing the lengths of the corners, it is BC < AD, the powder falls at part B before it falls at part A, so that more electrode powder falls at part B during the same time. As a result, the electrode powder may be stacked more thickly in the traveling direction of the current collector, thereby forming a density gradient.

Meanwhile, the supply direction of the electrode powder through the chute unit 30 may be disposed to have at least a component in the TD direction. Thus, the electrode powder supplied through the chute unit 30 may be stacked more thickly in the traveling direction of the current collector, thereby forming a density gradient.

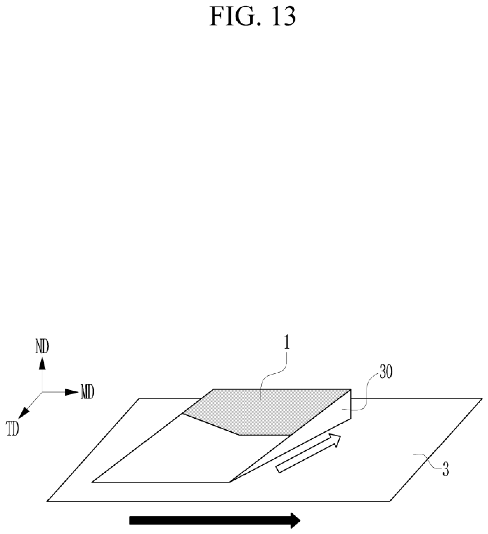

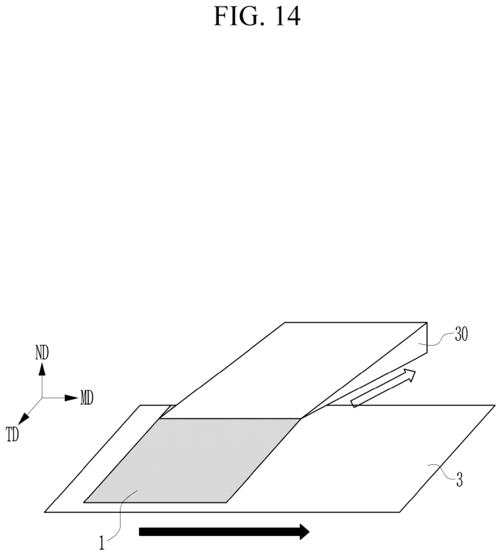

Referring to FIGS. 13 and 14, the chute unit 30 may be configured to be movable in the TD direction and thus supply the electrode powder 1 in the TD direction on the current collector 3. Specifically, when the electrode powder 1 is fallen and supplied from the feeder unit to the upper part of the chute unit 30, the electrode powder 1 is provided onto the current collector 3 through the chute unit 30. When the electrode powder 1 begins to fall onto the current collector 3, the chute unit 30 may move in the TD direction. Thereby, the electrode powder 1 may be evenly spread even in the TD direction on the current collector 3.

Then, when all the electrode powder 1 has fallen onto the current collector 3 and the electrode powder 1 is no longer provided on the current collector 3, the chute unit 30 may interrupt moving in the TD direction. That is, while the chute unit 30 moves in the TD direction, a coated portion of the electrode may be formed, and while the chute unit 30 stops moving in the TD direction, a non-coated portion of the electrode may be formed.

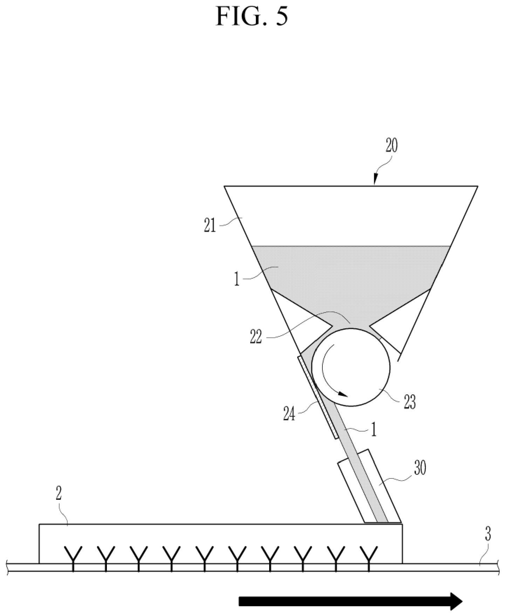

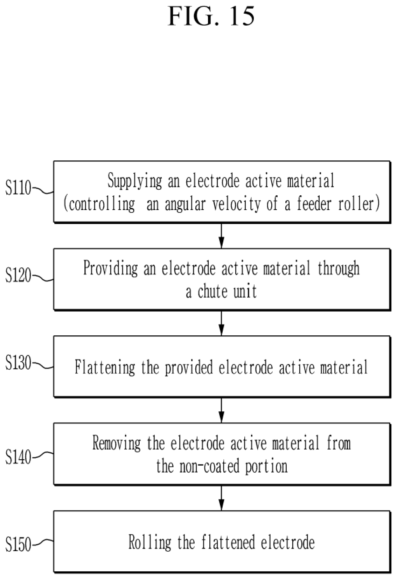

FIGS. 5 to 12 show enlarged views of each detailed step in the electrode manufacturing process of FIG. 1. FIG. 15 shows a flowchart of an electrode manufacturing method according to an embodiment of the present disclosure.

An electrode manufacturing method according to an embodiment of the present disclosure may broadly comprise a step (S110) of supplying an electrode powder from a feeder unit to a chute unit 30, a step (S120) of providing the electrode powder supplied through the chute unit from the feeder unit onto a traveling current collector; and a step (S130) of flattening the electrode powder provided on the current collector. Additionally, the electrode manufacturing method may comprise a step (S140) of removing the electrode powder 1 remaining in the non-coated portion. In addition, the electrode manufacturing method may further comprise a step (S150) of rolling the flattened electrode powder 1 with a rolling member.

The step (S110) of supplying an electrode powder from a feeder unit to a chute unit 30 may more specifically include a step (S111) of supplying an electrode powder 1 from a feeder unit 20 to a chute unit 30 during a first predetermined time interval (0≤*t*≤*Tp*, see FIG. 3); and a step (S112) of interrupting the supply of the electrode powder 1 from the feeder unit 20 to the chute unit 30 during a second predetermined time interval (*Tp*≤*t*≤*Ts*, see FIG. 3).

FIGS. 5 and 6 show enlarged views of the step (S111) of supplying electrode powder 1 from the feeder unit 20 during a first predetermined time interval. FIG. 5 shows the time point of start of a first predetermined time interval, and FIG. 6 shows the time point just before then end of a first predetermined time interval.

Referring to FIG. 5, the feeder roller 23 begins to rotate, and the electrode powder 1 begins to be provided to the current collector 3 through the chute unit 30. Referring to FIG. 6, when the rotating feeder roller 23 stops rotating, the provision of the electrode powder 1 to the current collector 3 through the chute unit 30 may be interrupted. The region where the electrode powder 1 is provided to the current collector 3 and flattened in step S130 may correspond to a coated portion of the electrode.

At this time, as indicated by the dotted lines in FIGS. 5 and 6, in some cases, the electrode powder 1 may be provided only up to a point where a predetermined distance is spaced away from the front end and/or rear end of the region where the coated portion of the electrode is ultimately formed. That is, the electrode powder 1 may not be provided up to the most end parts of the front end and/or rear end. This is because when flattening is performed in step S130, the electrode powder 1 provided near the front end and/or rear end may be pushed by the squeezer 40, so that the electrode powder 1 may ultimately be located up to the front end and/or rear end of the region where the coated portion of the electrode is formed. However, according to the present disclosure, whether or not the region where the electrode powder 1 is provided is spaced from the most end parts of the front end and/or rear end, and the extent to which they are separated, may vary depending on the viscosity of the electrode powder 1 according to the composition of the electrode powder 1.

Further, in some cases, even if the section where the largest amount is discharged is located at the edge as indicated by the dotted line in FIG. 6, the edge may change in height due to gravity before flattening the electrode, but this is not always the case. The extent of this change may vary depending on factors such as the viscosity of the electrode powder 1 according to its composition.

Meanwhile, as described above, providing the electrode powder 1 onto the current collector 3 through the chute unit 30 also includes providing other electrode powder 2 or the like by interposing between the current collector 3 and the electrode powder 1, as shown in FIGS. 5 and 6.

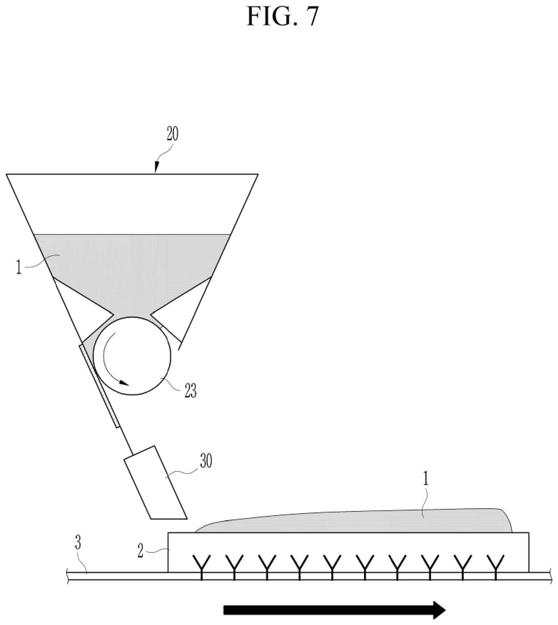

FIG. 7 shows an enlarged view of the step S112 of interrupting the supply of electrode powder 1 from the feeder unit 20 during a second predetermined time interval. At this time, the feeder roller 23 may stop rotating during the second predetermined time interval. Since the electrode powder 1 cannot be discharged through a narrow gap between the opening 22 of the feeder unit 20 and the feeder roller 23, the supply of the electrode powder 1 is interrupted. Since the current collector 3 continues to move during the second predetermined time interval, the region where the electrode powder 1 is not provided and the current collector 3 is exposed may become a non-coated portion of the electrode.

The step S111 and step S112 may be performed alternately and repeatedly. In step S111, the portion where the electrode powder 1 is provided onto the current collector 3 during the first predetermined time interval and is flattened in step S140 described below may become the coated portion of the electrode. In step S112, the region where the supply of the electrode powder 1 from the feeder unit 20 is interrupted during a second predetermined time interval and the current collector 3 is exposed may become a non-coated portion of the electrode. An electrode pattern may be formed by disposing the non-coated portion and the coated portion in this manner.

Next, the electrode powder supplied through the chute unit 30 from the feeder unit may be provided to the traveling current collector (S120). To compensate for the problem that the angular velocity at which the feeder roller of the feeder unit rotates is not completely proportional to the discharge amount of the electrode powder as described above, the electrode powder may be coated onto the current collector through the chute unit 30 including a trapezoid-shaped chute. The electrode powder supplied through the chute unit 30 in step S120 may be stacked more thickly in the traveling direction of the current collector, thereby forming a density gradient.

At this time, (B-1) while the electrode powder 1 is provided onto the current collector 3, the chute unit 30 may move in the TD direction, and (B-2) while the electrode powder 1 is not provided onto the current collector 3, the chute unit 30 can interrupt moving in the TD direction. Thereby, the coated portion of the electrode may be formed in step (B-1), and the non-coated portion of the electrode may be formed in step (B-2). In particular, in a continuous process, step (B-1) and step (B-2) are performed alternately and repeatedly, so that patterns of the coated portion and the non-coated portion may be formed alternatively.

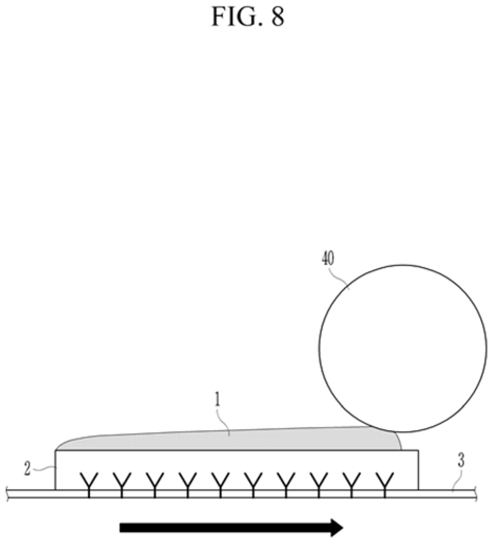

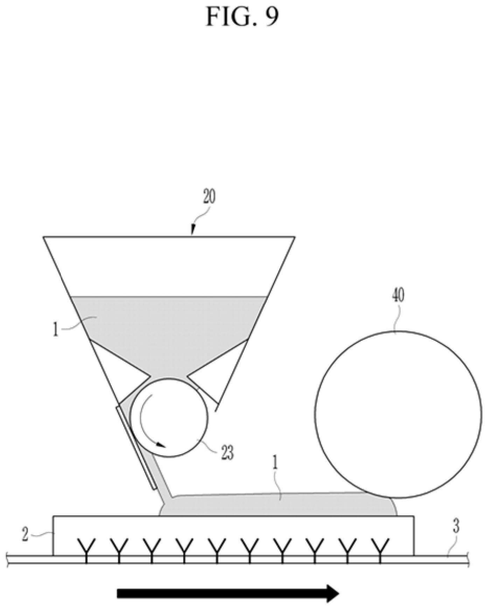

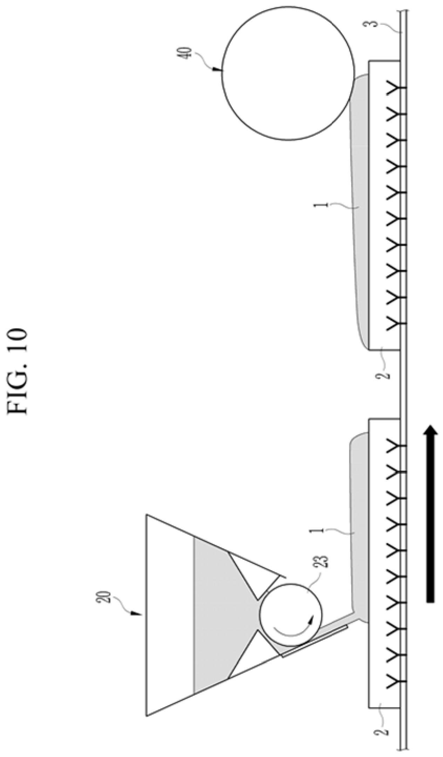

Step (S130) of flattening the supplied electrode powder 1 with a squeezer 40 is performed. FIG. 8 shows an enlarged view of the step S130 of flattening the electrode powder 1 with a squeezer 40. FIGS. 9 and 10 are reference diagrams of FIG. 8. First, as described above, the squeezer 40 may be, for example, a roller, or a doctor blade, or any of various other types of squeezers.

After flattening is performed in Step S130 as shown in FIG. 8, the electrode powder 1 may be made uniform in thickness across the entire coated portion region as shown in FIG. 12. At this time, as described above, in the region where a relatively large amount of electrode powder 1 is discharged, a larger amount of electrode powder 1 is present within the same thickness, so that the density may be relatively higher. Conversely, in the region where a relatively small amount of electrode powder 1 is discharged, a smaller amount of electrode powder 1 is present within the same thickness, so that the density may be relatively lower. As a result, variations in density may occur even in the electrode powder 1 layer (see Figure 12).

Further, regardless of whether the height of the electrode powder 1 provided onto the current collector 3 in step S110 is high or low, the height of the electrode powder 1 must be uniformly flattened by the squeezer 40 in step S130. Therefore, in some cases, the pressure applied by the squeezer 40 to the electrode powder 1 may be adjusted. The region where the height of the provided electrode powder 1 is relatively high (i.e., the region where a relatively large amount of electrode powder 1 is provided) may be pressed with a higher pressure, and the region where the height of the provided electrode powder 1 is relatively low (i.e., the region where a relatively small amount of electrode powder 1 is provided) may be pressed with a lower pressure.

At this time, the height of the electrode powder 1 provided is adjusted according to the angular velocity of the feeder roller 23, so that a control unit (not shown) may adjust the pressing force of the squeezer 40 linked to the feeder roller 23 in accordance with the angular velocity of the feeder roller 23. Alternatively, the height of the provided electrode powder 1 may be measured by a sensor (not shown), the measured height may be transmitted to a control unit (not shown), and the pressing force of the squeezer 40 linked thereto may be adjusted according to the measured height of the electrode powder 1. Thus, various modifications and variations can be made.

Meanwhile, as shown in FIG. 9, in the case of FIG. 9, the feeder unit 20 and the squeezer 40 are disposed adjacent to each other, and the electrode powder 1 is supplied to the feeder unit 20 based on one coated portion region, and then flattened by the squeezer 40 to form one electrode coated portion. Alternatively, as shown in FIG. 10, the region where the feeder unit 20 is disposed and the region where the squeezer 40 is disposed are separated (i.e., the feeder unit 20 and the squeezer 40 are disposed further apart than one coated portion region), and in the region where the feeder unit 20 is disposed, the process of supplying the electrode powder 1 to the feeder unit 20 (S110) and interrupting the supply of electrode powder 1 (S112) is repeated, while the current collector 3 provided with the electrode powder 1 may enter the region where the squeezer 40 is disposed, so that the electrode powder 1 may be flattened by the squeezer 40 (S130).

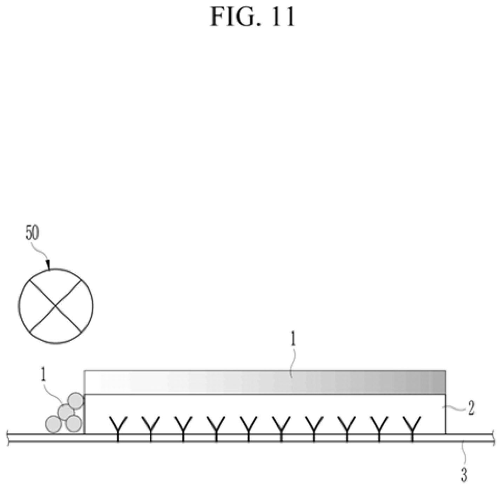

Alternatively, a step (S140) of removing the electrode powder 1 remaining on the non-coated portion may be performed. FIG. 11 shows an enlarged view of a step (S140) of removing the electrode powder 1 remaining on the non-coated portion. If the electrode powder 1 remains on the non-coated portion, it may affect the quality of the manufactured electrode, and to prevent this, a step S140 may be further performed. As described above, the electrode powder 1 may be removed by blowing air using an air blower 40 as part of the dry electrode manufacturing process.

In addition, a step (S150) of rolling the flattened electrode powder 1 with a rolling member (not shown) may be optionally performed. The rolling member may be, for example, a rolling roller used in a typical electrode manufacturing process, and the rolling member is not particularly limited.

FIG. 12 shows an enlarged view of the electrode after steps S110 to S140 have been performed.

First, referring again to FIG. 3, in the example of Mathematical Equation 1 regarding the angular velocity ω(t) in FIG. 3, during one cycle (the first predetermined time interval) in which the coated portion is formed while the current collector 3 is traveling, the feeder roller 23 may rotate at a fast angular velocity in the beginning, and the angular velocity of the feeder roller 23 may decrease toward the rear end. Thereby, based on the traveling direction of the current collector 3, a relatively large amount of electrode powder 1 is supplied to the front end of the coated portion through the chute unit 30, and the amount of electrode powder 1 supplied to the rear end of the coated portion through the chute unit 30 may decrease. Thereby, the density of the electrode powder 1 may gradually decrease along the longitudinal direction of the electrode (the longitudinal direction of the current collector 3 and the longitudinal direction of the coated portion). FIG. 12 shows a case in which the density of the electrode powder 1 gradually decreases.

In summary, when the current collector 3 travels in a sheet form and the electrode powder 1 is supplied thereon (S110), the amount of the electrode powder 1 supplied can vary according to the angular velocity of the feeder roller 23. The thickness of the electrode powder supplied through the chute unit 30 including a trapezoid-shaped chute may be varied in the traveling direction of the current collector (S130). After the electrode powder 1 is flattened with the squeezer 40 (S130), the density of the electrode powder 1 in the coated portion of the electrode may be varied along the longitudinal direction of the electrode (that is, the longitudinal direction of the current collector 3 and the longitudinal direction of the coated portion).

The electrode according to the present disclosure may be a positive electrode or a negative electrode. That is, the electrode manufacturing process according to the present disclosure is not particularly limited to the positive electrode and negative electrodes, and can be easily applied to the manufacture of any electrode. Different electrodes can be manufactured according to the materials (e.g., positive electrode active material or negative electrode active material) used in the manufacture of each electrode. Therefore, Therefore, unless otherwise defined, the term "electrode" used herein, such as electrode, electrode powder 1, and electrode current collector 3, may refer to both positive electrode and negative electrode.

In the dry electrode manufacturing process of the present disclosure, an electrode active material, a binder polymer, and the like are dry-mixed to obtain a dry powder mixture.

Any suitable material containing lithium and capable of intercalating and deintercalating lithium ions may be used as the positive electrode active material. For example, the positive electrode active material may include a layered compound such as lithium cobalt oxide (LiCoO₂) and lithium nickel oxide (LiNiO₂) or a compound substituted with one or more transition metals; lithium manganese oxides such as formula Li₁₊ₓMn₂₋ₓO₄ (where, x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni-site type lithium nickel oxides represented by formula LiNi₁₋ₓMₓO₂ (where M= Co, Mn, Al, Cu, Fe, Mg, B or Ga, and x = 0.01 ~ 0.3); lithium manganese composite oxides represented by formula LiMn₂₋ₓMₓO₂ (where M = Co, Ni, Fe, Cr, Zn or Ta , and x = 0.01 ~ 0.1) or Li₂Mn₃MO₈ (where M = Fe, Co, Ni, Cu or Zn); spinel-structured lithium manganese composite oxide represented by formula LiNixMn₂₋ₓO₄; LiMn₂O₄ in which a portion of Li is substituted with alkaline earth metal ions; a disulfide compound; Fe₂ (MoO₄)₃, and the like, but are not be limited thereto. Additionally, the positive electrode may include a positive electrode mixture layer containing lithium metal, a carbon material, a metal compound, and a mixture thereof. The metal compound may be a compound containing one or more metal elements selected from the group consisting of Si, Ge, Sn, Pb, P, Sb, Bi, Al, Ga, In, Ti, Mn, Fe, Co, Ni, Cu, Zn, Ag, Mg, Sr, and Ba, or a mixture thereof.

The negative electrode may be manufactured by providing the negative electrode active material onto the negative electrode current collector and rolling it, or may be manufactured by a dry process similar to the positive electrode manufacturing process described above. If necessary, the negative electrode may further include a conductive material, an organic binder polymer, and an additive, similar to those used in the positive electrode.

In addition, the negative electrode active material may include, for example, a carbon material and a silicon material. The carbon material refers to a carbon material including a carbon atom as a main component, and examples of the carbon material may include graphite having a completely layered crystalline structure such as natural graphite, soft carbon having a low crystalline layered crystalline structure (graphene structure; a structure in which hexagonal honeycomb planes of carbon are arranged in layers) and hard carbon in which the above-described structures are mixed with amorphous parts, artificial graphite, expanded graphite, carbon fibers, non-graphitizing carbon, carbon black, acetylene black, Ketjen black, carbon nanotubes, fullerenes, activated carbon, graphene, and carbon nanotubes, and preferably, one or more selected from the group consisting of natural graphite, artificial graphite and carbon nanotubes. More preferably, the carbon material includes natural graphite and/or artificial graphite, and may include any one or more of carbon black and carbon nanotubes together with the natural graphite and/or artificial graphite. In this case, the carbon material may comprise 0.1 to 10 parts by weight of carbon black and/or carbon nanotubes with respect to a total of l 100 parts by weight of the carbon material, and more specifically, it may comprise 0.1 to 5 parts by weight; or 0.1 to 2 parts by weight of carbon black and/or carbon nanotubes with respect to a total of 100 parts by weight of the carbon material.

In addition, the silicon material is a particle including silicon (Si), which is a metal component, as a main component, and may include one or more of silicon (Si) particles and silicon oxide (SiOₓ, 1≤X≤2) particles. In one example, the silicon material may include silicon (Si) particles, silicon monoxide (SiO) particles, silicon dioxide (SiO₂) particles, or a mixture thereof.

According to an embodiment of the present disclosure, the current collector includes a metal plate having electrical conductivity and may be one selected suitably depending on polarity of electrodes known in the field of secondary batteries.

According to an embodiment of the present disclosure, the conductive material is not particularly limited, as long as it causes no chemical change in the corresponding battery and has conductivity.

According to an embodiment of the present disclosure, the binder resin is not particularly limited, as long as it is an ingredient which assists binding of the active material, conductive material, and the like, and binding of the ingredients to the current collector.

An electrode manufactured by applying the electrode manufacturing apparatus and the electrode manufacturing method according to the above-described embodiments may be included in a secondary battery, and such secondary batteries can be assembled in plurality to form a battery module. The battery module may be mounted together with various control and protection systems such as a BMS (battery management system), and a cooling system, to form a battery pack.

The secondary battery, the battery module, or the battery pack can be applied to various devices. Specifically, they can be applied to transportation vehicles such as electric bicycles, electric vehicles, and hybrid vehicles, but are not limited thereto, and can be applied to various devices that utilize secondary batteries.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

1, 2: electrode powder
3: current collector
4: primer
10: electrode manufacturing apparatus
20: feeder unit
21: storage unit
22: discharge port
23: feeder roller
24: guide unit
30: chute unit
40: squeezer
50: air blower

## Claims

1. A dry electrode manufacturing apparatus, comprising:
a feeder unit including a discharge port opened at a lower part thereof and a feeder roller installed below the discharge port;
a chute unit configured to receive an electrode powder discharged from the discharge port and supply the electrode powder onto a traveling current collector; and
a squeezer configured to flatten the electrode powder supplied onto the current collector,
wherein a density of the flattened electrode powder in a traveling direction of the current collector is adjusted according to an amount of the electrode powder supplied onto the current collector from the chute unit.

2. The dry electrode manufacturing apparatus according to claim 1,
wherein the density of the flattened electrode powder by the squeezer is adjusted according to a height of the electrode powder supplied onto the current collector.

3. The dry electrode manufacturing apparatus according to claim 1,
wherein an amount of electrode powder discharged between the discharge port and the feeder roller increases as an angular velocity of the feeder roller increases, decreases as the angular velocity of the feeder roller decreases,
discharge of the electrode powder being interrupted when the angular velocity of the feeder roller is zero.

4. The dry electrode manufacturing apparatus according to claim 1,
wherein the feeder unit controls an angular velocity of the feeder roller to adjust an amount of electrode powder provided to the chute unit,
the feeder roller being controlled by the angular velocity ω(*t*) of the following Mathematical Equation 1: [Mathematical Equation 1] $\begin{matrix}ω \left(t\right) = \left\{\begin{matrix}{ω}_{m} cos \left(\frac{πt}{2 {T}_{P}}\right) & \left(0\leq t\leq {T}_{P}\right) \\ 0 & \left({T}_{P}\leq t\leq {T}_{P}+{T}_{S}\right)\end{matrix}\right. \\ ω \left(t+n\left({T}_{P}+{T}_{S}\right)\right) = ω \left(t\right)\end{matrix}$
wherein, *Tp* is a first predetermined time interval, *Ts* is a second predetermined time interval, ω*m* is a maximum angular velocity, and *n* is a positive integer.

5. The dry electrode manufacturing apparatus according to claim 1,
wherein the feeder unit further includes a leakage prevention structure having inclined surfaces formed on both sides thereof inclined toward the discharge port,
the leakage prevention structure being movable up and down along the inclined surfaces according to an angular velocity of the feeder roller.

6. The dry electrode manufacturing apparatus according to claim 1,
wherein the chute unit includes a trapezoid-shaped chute having a cross-sectional area that narrows downward,
both sides of the trapezoid-shaped chute being parallel to each other and having different lengths such that more electrode powder is supplied from one side portion having the shorter length than the other side portion having the longer length.

7. The dry electrode manufacturing apparatus according to claim 1,
wherein the chute unit is disposed such that a supply direction of the electrode powder has at least a component in a transverse direction of the current collector.

8. The dry electrode manufacturing apparatus according to claim 1,
wherein the chute unit being configured to move in the transverse direction of the current collector and to supply the electrode powder in the transverse direction onto the current collector.

9. The dry electrode manufacturing apparatus according to claim 1,
wherein the feeder unit is configured to provide the electrode powder to the chute unit during a first predetermined time interval to form a coated portion of the electrode, and to interrupt the provision of the electrode powder to the chute unit during a second predetermined time interval to form a non-coated portion of the electrode.

10. The dry electrode manufacturing apparatus according to claim 1, further including an air blower configured to remove the electrode powder remaining on the non-coated portion of the electrode.

11. A dry electrode manufacturing method, comprising the steps of:
(A) providing an electrode powder from a feeder unit to a chute unit;
(B) supplying the electrode powder onto a traveling current collector through the chute unit; and
(C) flattening the electrode powder supplied onto the current collector,
wherein a density of the flattened electrode powder in a traveling direction of the current collector is adjusted according to an amount of electrode powder supplied in step (B).

12. The dry electrode manufacturing method according to claim 11,
wherein, in step (B), the density of the flattened electrode powder after step (C) is adjusted according to a height of the electrode powder supplied onto the current collector.

13. The dry electrode manufacturing method according to claim 11,
wherein the step (A) includes:
(A-1) providing the electrode powder from the feeder unit to a chute unit during a first predetermined time interval to form a coated portion of the electrode; and
(A-2) interrupting the provision of the electrode powder from the feeder unit to the chute unit during a second predetermined time interval to form a non-coated portion of the electrode.

14. The dry electrode manufacturing method according to claim 13,
wherein the steps (A-1) and (A-2) are performed alternately and repeatedly such that the coated portion and the non-coated portion are formed in an alternating pattern.

15. The dry electrode manufacturing method according to claim 11,
wherein, in step (A):
an amount of electrode powder provided to the chute unit is adjusted according to an angular velocity of a feeder roller installed below a discharge port of the feeder unit,
provision of the electrode powder being interrupted when the angular velocity of the feeder roller is zero.

16. The dry electrolyte manufacturing method according to claim 15,
Wherein the amount of the electrode powder increasing as the angular velocity of a feeder roller increases, and decreasing as the angular velocity of the feeder roller decreases.

17. The dry electrode manufacturing method according to claim 15,
wherein, in step (A), the angular velocity of the feeder roller and the amount of the electrode powder provided to the chute unit have a linear relationship.

18. The dry electrode manufacturing method according to claim 11,
wherein step (B) includes:
(B-1) moving the chute unit in a transverse direction of the current collector while the electrode powder is supplied onto the current collector to form a coated portion of the electrode; and
(B-2) stopping the movement of the chute unit in the transverse direction of the current collector while the electrode powder is not supplied onto the current collector to form a non-coated portion of the electrode.

19. The dry electrode manufacturing method according to claim 18,
wherein steps (B-1) and (B-2) are performed alternately and repeatedly such that the coated portion and the non-coated portion are formed in an alternating pattern.

20. The dry electrode manufacturing method according to claim 15,
wherein in step (A), a height of the electrode powder provided to the chute unit is adjusted according to the angular velocity of the feeder roller,
in step (B), the electrode powder provided from the feeder unit is supplied onto the traveling current collector through the chute unit at the adjusted height, and
in step (C), the electrode powder is flattened such that a density thereof is adjusted according to the adjusted height.

21. The dry electrode manufacturing method according to claim 15,
wherein, in step (A), the feeder unit controls an angular velocity ω(*t*) of the feeder roller to adjust the amount of electrode powder provided to the chute unit,
the angular velocity of the feeder roller being controlled according to the following Mathematical Equation 1: [Mathematical Equation 1] $\begin{matrix}ω \left(t\right) = \left\{\begin{matrix}{ω}_{m} cos \left(\frac{πt}{2 {T}_{P}}\right) & \left(0\leq t\leq {T}_{P}\right) \\ 0 & \left({T}_{P}\leq t\leq {T}_{P}+{T}_{S}\right)\end{matrix}\right. \\ ω \left(t+n\left({T}_{P}+{T}_{S}\right)\right) = ω \left(t\right)\end{matrix}$
wherein, *Tp* is a first predetermined time interval, *Ts* is a second predetermined time interval, *ωm* is a maximum angular velocity, and *n* is a positive integer.

22. The dry electrode manufacturing method according to claim 11, further including, after step (C):
(D) removing the electrode powder remaining on a non-coated portion of the electrode, and
(E) rolling the electrode powder.
